# EUROPEAN PATENT APPLICATION

(11) **EP 1 202 603 A1**
(43) Date of publication of application: **02.05.2002**
(21) Application number: 00939127.7
(22) Date of filing: 22.06.2000
(51) Int. Cl.: H04R 3/00, G10L 19/00, G10L 101/00

(54) **SPEECH REPRODUCTION SYSTEM, SPEECH SIGNAL GENERATOR SYSTEM AND CALLING SYSTEM**

(71) Applicant: MITSUBISHI DENKI KABUSHIKI KAISHA, Tokyo 100-8310 (JP); Mitsubishi Denki Engineering Kabushiki Kaisha, Tokyo 100-0004 (JP)
(72) Inventor: TAKAOKA, Yosuke, Mitsubishi Denki Kabushiki Kaisha, Chiyoda-ku, Tokyo 100-8310 (JP); URAZOE, Koichi, Mitsubishi Denki Engineering K.K., Chiyoda-ku, Tokyo 100-0004 (JP)
(74) Representative: Meissner, Bolte & Partner
(86) International application number: JP0004103
(87) International publication number: WO0199469

(57) **Abstract**

This invention is to generate an optimum sound field by controlling the output level and/or frequency characteristic of a voice according to the distance between a microphone and/or speaker and the user.

## Description

### Technical Field

This invention is related to a voice reproducing system for reproducing a voice based on an input voice signal, a voice signal generating system for generating an output voice signal according to a voice, and a speech communication system combining these, and more particularly relates to a voice reproducing system, a voice signal generating system, and a speech communication system which can advantageously be used with a mobile terminal such as a mobile phone terminal.

### Background Art

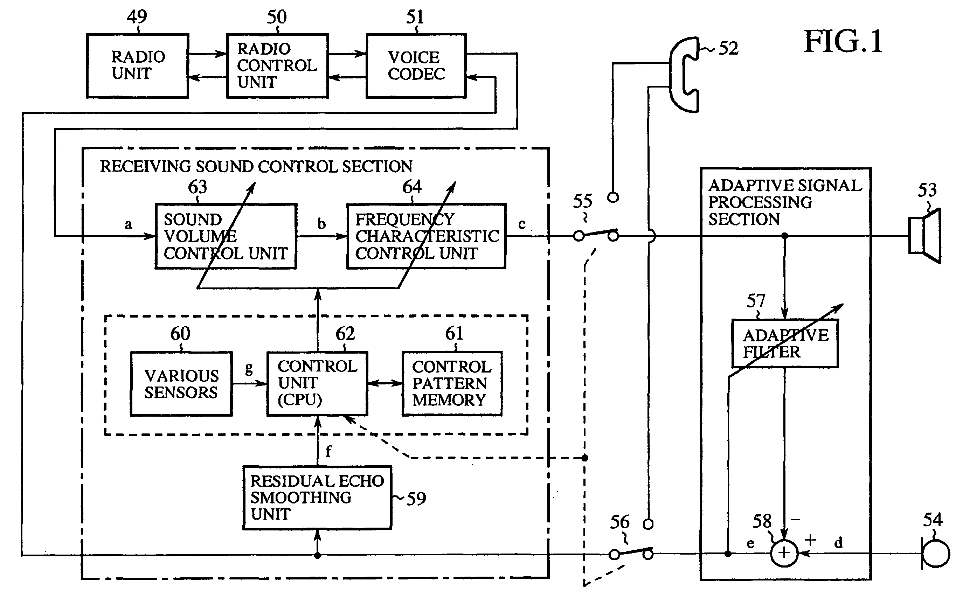

Fig. 1 is a system block diagram showing the conventional speech communication system disclosed in Japanese Patent Application Laid-Open No. 7-321729. In the figure, reference numeral 49 denotes a radio unit, 50 denotes a radio control unit, 51 a voice CODEC, 52 a handset equipped with a microphone and a speaker, 53 a loudspeaker, and 54 denotes a hand-free microphone. Further, 55 is an input selector switch for switching the output destination of the input voice signal outputted from the voice CODEC 51 either to the speaker or to the loudspeaker 53, 56 is an output selector switch for switching the input source of the output voice signal input to the voice CODEC 51 either to the microphone or to the hand-free microphone 54, 57 is an adaptive filter for filtering the input voice signal supplied to the loudspeaker 53, 58 is an adder for subtracting the output of the adaptive filter from the output voice signal outputted from the hand-free microphone 54, 59 is a residual echo smoothing unit, 60 represents various sensors for detecting speed, noise, etc., 61 is a control pattern memory for storing control values corresponding to the detected values of these sensors 60 and the output of the residual echo smoothing unit 59, 62 is a control unit for searching the control pattern memory 61 according to these detected values and the output of the residual echo smoothing unit 59 to output predetermined control values, 63 is a sound volume control unit for varying the output level based on the input voice signal according to the control values, and 64 is a frequency characteristic control unit for varying the frequency characteristic of a voice based on the input voice signal according to the control values.

The operation is now described.

The coded input voice signal generated in the radio unit 49 based on a received radio wave is decoded in the voice CODEC 51 through the radio control unit 50. And, if the output destination of the input selector switch 55 is set to the handset 52, a voice is reproduced from the speaker based on the decoded input voice signal, and if it is set to the loudspeaker 53, a voice is reproduced from the loudspeaker 53.

Further, if the input source of the output selector switch 56 is the handset 52, an output voice signal is inputted from the microphone to the voice CODEC 51, and if the input source of the output selector switch 56 is the hand-free microphone 54, the output voice signal is inputted to the voice CODEC 51 from the hand-free microphone 54. And, the voice CODEC 51 codes these output voice signals to generate a coded output voice signal, and a radio wave based on the coded output voice signal is outputted from the radio unit 49 under the control of the radio control unit 50.

And, while these operations are performed, if a voice is to be outputted from the loudspeaker 53, the input voice signal to be inputted to the loudspeaker 53 is filtered by the adaptive filter 57, and the output of the adaptive filter 57 is subtracted from the output of the hand-free microphone 54 by the adder 58. This allows removal of the echo component having run around from the loudspeaker 53 to the hand-free microphone 54, thereby to increase the quality of the output voice signal.

Further, the residual echo smoothing unit 59 smoothes the echo component contained in the output voice signal and outputs it to the control unit, regardless of whether it is from the handset 52 or a hand-free set. The control unit 62 searches the control pattern memory 61 based on the residual echo and the detected values of the various sensors 60, and the sound volume control unit 63 and the frequency characteristic control unit 64 adjust the output level and the frequency characteristic of the voice based on the input voice signal according to the control values, which are the search results.

The conventional speech communication system is constructed as described above, and for instance, if the surrounding noise level increases, the various sensors 60 detect that, and the output level and frequency characteristic of the voice can be adjusted accordingly. Thus, it is convenient, because the user need not adjust the sound volume of the loudspeaker 53, the sensitivity of the hand-free microphone 54 and the like according to each use condition. However, there was a problem that direct application of the conventional speech communication system to a mobile terminal such as a mobile phone terminal did not always make the voice easy to hear.

A specific description is made below. The above conventional speech communication system is directed to vehicles, and the distance between the loudspeaker 53 or the hand-free microphone 54 and the user can be assumed to be substantially constant, as in other common speech communication systems. Thus, taking this into consideration, a basic output and a standard value for sensitivity can be determined to carry out the manufacturing, and control can be made according to noise. However, in a mobile terminal such as a mobile phone terminal, the distance is fixed to a certain degree and the manufacturing can be made according to that, but, since it may be driven by a low-capacity battery or the like, the speaker sound volume and the microphone sensitivity are basically suppressed as low as possible to reduce the power consumption. Accordingly, the manufacturing cannot be performed assuming the use by an average user in the normal use condition (distance), as is in the above speech communication system directed to vehicles, and in addition, control simply in consideration of noise can not always make the voice easy to hear.

Specifically, in the mobile terminal having a TV phone function which has recently been manufactured, the range of variation of the distance between the speaker or the microphone is very wide as compared with the mobile phone having only a speech function, and thus it is substantially impossible to set the above standard values. That is, in such mobile terminal having the TV telephone function, for instance, the distance between the ears and the speaker is quite different between the normal phone call, in which the device is made contact with an ear, and the TV phone call, and thus, the manufacturing with one of them being standard would obviously cause very hard hearing in the other.

Further, to give priority to realize the reduction in power consumption, the microphone and the speaker are close together in the mobile terminal, and if the sound volume level and the sensitivity level of them are simply increased, the sound of the microphone runs around to the speaker to cause an echo, so the sound becomes very hard to hear.

As a result, in the mobile terminal such as the mobile phone terminal, a good sound field cannot be generated only by controlling the sound volume level or the frequency characteristic according to the degree of noise, so the voice is not always be made easy to hear.

Conversely, also in a vehicle, a variety of surrounding noise conditions may occur, but more various and worse noise conditions may occur in the mobile terminal which is used in an open space. And, to perform the sound volume control while meeting such all conditions, it may be possible to successively add a wider variety of sensors than the conventional speech communication system and control the speaker sound volume and the microphone sensitivity based on them, but such approach causes complication of the construction as well as upsizing of the device and increase in the power consumption, so that it will never be made util.

The above description has been made to the case of a mobile terminal by way of example, but a similar problem will also occur in a permanently-installed telephone if it is used in an environment giving a large surrounding noise or a rapidly varying surrounding noise, or if it is used in an environment which easily causes the sound runaround from the speaker to the microphone.

This invention has been accomplished to solve the above described problems, and its object is to obtain a voice reproducing system, a voice signal generating system, and a speech communication system, in which tan easiness for voice hearing is increased in a wide variety of circumstances with a simple construction while reducing the basic power consumption of the device, and in which a sound field giving good hearing can be formed even if it is applied to a mobile phone terminal or the like, in particular, if applied to a mobile terminal having a TV telephone function.

### Disclosure of the Invention

The voice reproducing system related to this invention is a voice reproducing system having a voice input means to which an input voice signal is inputted, and a voice reproducing means for reproducing a voice according to the output of the voice input means, which voice reproducing system comprising: an input sound volume level control means disposed in the transmission path for input voice signal from the voice input means to the voice reproducing means, for controlling such that the sound volume level of the voice outputted from the voice reproducing means changes; and/or an input frequency characteristic control means disposed in the transmission path for input voice signal from the voice input means to the voice reproducing means for controlling such that the frequency characteristic of the voice outputted from the voice reproducing means changes; and further comprising: a distance detecting means for measuring the distance to a user hearing the voice; and a control means for outputting a control signal to the input sound volume control means and/or the input frequency characteristic control means according to information on the distance to the user which has been measured by the distance detecting means.

With this construction, if the distance between the voice input means such as a speaker and the user largely changes, for instance, control can be exercised so that the sound volume is increased as the distance becomes larger, and a voice can be reproduced with an optimum sound volume/quality giving easy hearing according to respective distances.

Accordingly, even if the distance between the speaker and the user varies within a certain range, as in a mobile terminal such as a mobile phone terminal, the sound volume of the speaker is suppressed as low as possible if the distance is short, while the sound volume of the speaker is increased as the distance becomes longer, by which reduction in the power consumption and ease of voice hearing can be made compatible with each other, and hence there is an effect that a good sound field can be produced for the user.

The voice reproducing system related to this invention includes a noise detecting means for measuring noise, and the control means outputs a control signal to the input sound volume level control means and/or the input frequency characteristic control means according to the information on the distance to the user along with the information on the noise measured by the noise detecting means.

Even if the surrounding noise condition changes, the above construction allows the sound volume level and frequency characteristic of the speaker to be controlled accordingly. Thus, the ease of voice hearing can be increased in a wide variety of circumstances with a simple construction while controlling the sound volume level and frequency characteristic of the speaker according to distance as well as reducing the basic power consumption of the device, so there is an effect that a sound field giving good hearing can be formed even if applied to a mobile phone terminal or the like, in particular, if applied to a mobile terminal having a TV telephone function.

The voice signal generating system related to this invention a voice signal generating system having a voice signal generating means for generating an output voice signal according to a voice, and a voice signal output means for outputting the output voice signal to the outside, the voice signal generating system comprising: an output sound volume level control means disposed in the transmission path for output voice signal from the voice signal generating means to the voice signal output means, for controlling such that the sound volume level of the voice reproduced according to the output voice signal changes; and/or an output frequency characteristic control means disposed in the transmission path for output voice signal from the voice signal generating means to the voice signal output means, for controlling such that the frequency characteristic of the voice reproduced according to the output voice signal changes; and further comprising: a distance detecting means for measuring the distance to the user having given the voice; and a control means for outputting a control signal to the output sound volume level control means and/or the output frequency characteristic control means according to information on the distance to the user which has been measured by the distance detecting means.

With this construction, even if the distance between the voice signal generating means such as the microphone and the user largely changes, then, for instance, control can be exercised so that the sensitivity level of the microphone is increased so as to increase the sound volume level at the time of reproduction as the distance becomes larger, so the voice signal can be generated with a sound volume/quality giving easy hearing at the time of reproduction according to respective distances.

Accordingly, even if the distance between the microphone and the user changes within a certain range, as in a mobile terminal such as a mobile telephone terminal, the reduction in power consumption and the ease of voice signal at the time of reproduction can be made compatible with each other by suppressing the microphone sensitivity as low as possible if the distance is short, and increasing the microphone sensitivity if the distance becomes longer, and hence there is an effect that a good sound field can be generated for the user on the reproducing side.

The voice signal generating system related to this invention includes a noise detecting means for measuring noise, and the control means outputs a control signal to the output sound volume level control means and/or the output frequency characteristic control means according to the information on the distance to the user along with the information on the noise measured by the noise detecting means.

The above construction allows the sound volume level and frequency characteristic in reproduction of the voice signal to be controlled according as the surrounding noise condition changes. Thus, the ease of hearing in reproduction of the voice signal generated in a wide variety of circumstances can be increased with a simple construction while controlling the sound volume level and frequency characteristic in reproduction according to distance as well as reducing the basic power consumption of the device, so there is an effect that a sound field giving good hearing can be formed at the time of reproduction even if applied to a mobile phone terminal or the like, in particular, if applied to a mobile terminal having a TV telephone function.

The speech communication system related to this invention includes both the above voice reproducing system and the above voice signal generating system.

Since this construction can produce all the above effects, there is an effect that a particularly good sound field can be generated between those speech communication systems. Specifically, if a noise detecting means for measuring noise based on the output voice signal is provided, and if the control means outputs a control signal to the above selected means according to the information on the distance to the user along with the information on the noise measured by the noise detecting means, there is an effect that a very excellent sound field giving easy hearing can be formed even if applied to a mobile terminal having a TV telephone function.

The speech communication system related to this invention includes: a filter to which an input voice signal is inputted from the signal path from the voice input means to the voice reproducing means, and which has a characteristic equivalent to the voice transmission characteristic from the voice reproducing means to the voice signal generating means; and an adder for adding the output of the filter to the output voice signal so as to remove the input voice signal component contained in the output voice signal.

This construction can effectively suppress the runaround from the speaker to the microphone, or echo, when the sound volume level or sensitivity level is increased, and thus, there is an effect that a very excellent sound field giving easy hearing can be formed even if the device is applied to a mobile terminal having a TV telephone function using a low power consumption-oriented microphone or speaker.

In the speech communication system related to this invention, the voice input means, voice reproducing means, voice signal generating means, input sound volume level control means, input frequency characteristic control means, output sound volume level control means, output frequency characteristic control means, distance detecting means, and control means are accommodated in one portable housing, and the control means has a memory means in which the distance to the user and the noise level are divided into a plurality of levels, and in which control values for the input sound volume level control means, input frequency characteristic control means, output sound volume level control means, and output frequency characteristic control means are stored for each level, and the control means searches the memory means according to the inputted information on the distance to the user, and outputs the values resulted from the search to the input sound volume level control means, input frequency characteristic control means, output sound volume level control means, and output frequency characteristic control means.

With this construction, as compared with the case where the control means calculates a value to be outputted to each of the input sound volume level control means, input frequency characteristic control means, output sound volume level control means, and output frequency characteristic control means, values allowing maintenance of the ease of hearing can promptly be outputted to these means while reducing the processing load of it to reduce the power consumption, so there is an effect that a mobile terminal fully capable of being practically used can be obtained.

The speech communication system related to this invention includes an image signal generating means for generating an output image signal according to a picked-up image, an image signal output means for outputting the output image signal to the outside, an information add-on means disposed in the transmission path for output image signal from the image signal generating means to the image signal output means, for adding information for varying the image to be reproduced according to the output image signal, and a combining means for combining the output image signal and the output voice signal, and the control means outputs additional information for image cutout to the information add-on means according to the information on the distance to the user.

With this construction, the required portion of an image can be enlarged and displayed using the additional information at the time of reproduction. Accordingly, even if it is applied to a mobile terminal having a TV telephone function, required one can be displayed in a large size by effectively using the screen of a display means, and desired one can be displayed in a stable size by controlling the cutout size according to distance, so the image visibility can be remarkably increased.

The speech communication system related to this invention includes a use state detecting means for detecting whether or not the image signal generating means is imaging the user, and the information add-on means changes the additional information to be added to the output image signal according to the contents detected by the use state detecting means.

With this construction, when imaging the user, part of the image can be cut out to enlarge and stably display the image to be displayed, and in other cases, for instance, if the surrounding scene is imaged, it can be displayed at a wide angle without being cut out, automatically enabling optimum imaging according to the use condition without changing the setting each time, so there is an effect that the usefulness can be increased.

The speech communication system related to this invention includes a separating means for separating an input signal into an input voice signal and an input image signal, a display means for displaying an image according to the input image signal, and a display image control means which is disposed in the transmission path for input image signal from the separating means to the display means, and, if the input image signal has added thereto additional information based on the information on the distance to the user, cuts out according to that a partial image from the image to be generated from the input image signal itself to display it on the display means.

With this construction, a required image portion from the image based on the input image signal can be enlarged and displayed on the display means. Accordingly, even if it is applied to a mobile terminal having a TV telephone function, required one can be displayed in a large size by efficiently utilizing the screen of the display means, and desired one can be displayed in a stable size by controlling the cutout size according to distance, so the visibility of the image can be remarkably increased.

The speech communication system related to this invention includes an image signal generating means for generating an output image signal according to a picked-up image, an image signal output means for outputting the output image signal to the outside, an information add-on means disposed in the transmission path for output image signal from the image signal generating means to the image signal output means, for adding information for changing the image to be generated according to the output image signal, and a combining means for combining the output image signal and the output voice signal, and wherein a display means displays the output image signal and/or the input image signal, and if the display means displays an image based on the output image signal, a display image control means cuts out a partial image from the image to display it on a display means according to the information on the distance to the user which has been measured by a distance detecting means.

With this construction, a cutout image similar to that being displayed on the display means of the counterpart can be displayed and confirmed on the display means on this end, the imaging method can easily be adjusted accordingly, so there is an effect that necessary matters can efficiently be communicated to the counterpart.

### Brief Description of the Drawings

Fig. 1 is a system block diagram showing the conventional speech communication system disclosed in Japanese Patent Application Laid-Open No. 7-321729;
Fig. 2 is a front view showing the mobile phone terminal according to a first embodiment for carrying out this invention;
Fig. 3 is a block diagram showing the construction of the speech communication system according to the first embodiment for carrying out this invention;
Fig. 4 is a block diagram showing the construction of the speech communication system according to a second embodiment for carrying out this invention;
Fig. 5 is a block diagram showing the construction according to a third embodiment for carrying out this invention;
Fig. 6 is a block diagram showing a variation of the speech communication system according to the third embodiment for carrying out this invention;
Fig. 7 is a block diagram showing the construction of the speech communication system according to a fourth embodiment for carrying out this invention;
Fig. 8 is a block diagram showing the construction of the speech communication system according to a fifth embodiment for carrying out this invention;
Fig. 9 is a block diagram showing a variation of the speech communication system according to the fifth embodiment for carrying out this invention; and
Fig. 10 is a block diagram showing the construction of the speech communication system according to a sixth embodiment for carrying out this invention.

### Best Embodiment for Carrying Out the invention

Now, to describe this invention in more detail, the best embodiment for carrying out this invention is described according to the accompanying drawings.

### (First Embodiment)

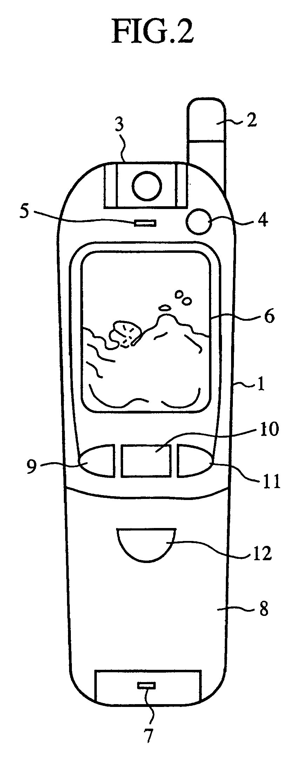

Fig. 2 is a front view showing the mobile phone terminal according to a first embodiment for carrying out this invention. In the figure, 1 is a portable housing incorporating a speech communication system in it, 2 is an antenna, 3 is a camera unit provided in the top portion of the portable housing 1 so as to be rotatable from the front side to the rear side, 4 is a distance sensor (distance detecting means) disposed in the vicinity of the camera unit 3, 5 is an opening for speaker made in the top potion of the portable housing 1, 6 is a liquid crystal display device disposed in the central portion of the portable housing 1, 7 is an opening for microphone made in the bottom portion of the portable housing 1, 8 is a flip member disposed for rotation about the bottom edge of the portable housing 1 and for covering the ten keys, not shown, that are provided in the bottom portion of the portable housing 1, 9 is a speech key, 10 is a speech history display key, 11 is a speech interrupt key, and 12 is a display switching key.

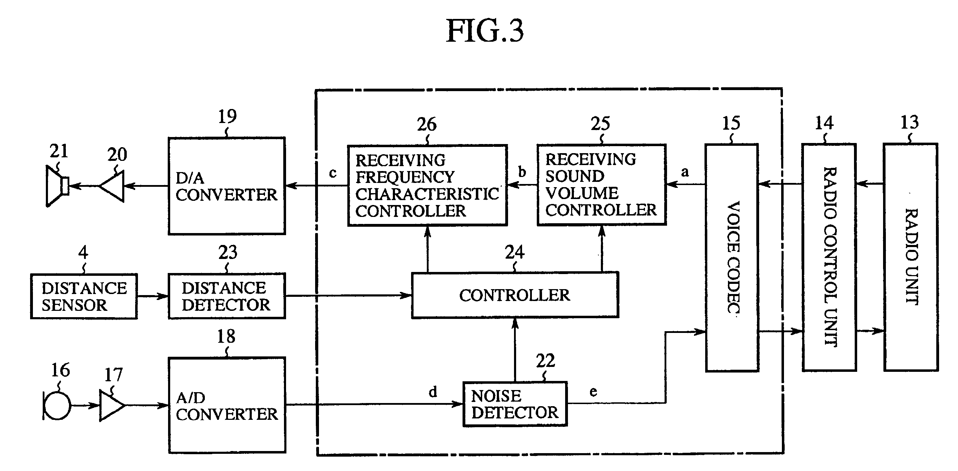

Fig. 3 is a block diagram showing the construction of the speech communication system according to the first embodiment for carrying out this invention. In the figure, 13 is a radio unit equipped with the antenna 2, for generating a coded receive signal according to the radio wave received by the antenna 2 or transmitting a radio wave according to an input coded output transmission signal, 14 is a radio control unit for buffering the coded receive signal or coded transmission signal, and controlling the transmission and reception by the radio unit 13 through a time division multiplex method, and 15 is a voice CODEC (voice input means, voice signal output means) having the coded receive signal directly inputted thereto from the radio control unit 14 as a coded input voice signal, decoding the coded input voice signal to output a digital input voice signal with a voice envelope being sampled, and coding a digital output voice signal to directly output it to the radio control unit 14 as a coded output voice signal.

Further, 16 is a microphone (voice signal generating means) disposed inside the opening 7 for microphone, for generating an analog output voice signal with an envelope corresponding to voice, 17 is an output amplifier for amplifying the analog output voice signal, 18 is an A/D converter for sampling the amplified analog output voice signal to generate a digital output voice signal, and outputting it to the voice CODEC 15, 19 is a D/A converter for outputting an analog input voice signal of a predetermined voice envelope according to the digital input voice signal outputted from the voice CODEC 15, 20 is an input amplifier for amplifying the analog input voice signal, and 21 is a speaker (voice reproducing means) disposed inside the opening 5 for speaker for outputting a voice corresponding to the analog input voice signal.

22 is a noise detector (noise detecting means) disposed in the digital output voice signal path between the A/D converter 18 and the voice CODEC 15, for detecting the noise level of the noise component contained in this signal, 23 is a distance detector (distance detecting means) for outputting a distance signal corresponding to the distance measured based on the output signal of the distance sensor 4, 24 is a controller (control means) for calculating and outputting control values corresponding to the distance signal and the noise level, 25 is a receiving sound volume controller (input sound volume control means) disposed in the input voice signal path between the voice CODEC 15 and the D/A converter 19, for applying a predetermined conversion process to the signal to control the sound volume level of a voice to be reproduced, and 26 is a receiving frequency characteristic controller (input frequency characteristic control means) disposed in the digital input voice signal path between the voice CODEC 15 and the D/A converter 19, for applying a predetermined conversion process to this signal to control the frequency characteristic of the voice to be reproduced. The disposition order of the receiving sound volume controller 25 and the receiving frequency characteristic controller 26 in the digital input voice signal path may be reverse to the same figure.

The operation is described below.

First, the transmitting operation is described. In the condition where the radio unit 13 and the radio control unit 14have established a predetermined wireless line with a phone terminal on the other end, not shown, through a base station, not shown, if the user of this mobile phone terminal gives a vocal sound near the opening 7 for microphone, the diaphragm of the microphone 16, not shown, vibrates in response to the sound, and an analog output voice signal with an envelope corresponding to the voice is generated. This analog output voice signal is amplified in the output amplifier 17, then sampled and converted to a digital output voice signal in the A/D converter 18, and coded and converted to a coded output voice signal in the voice CODEC 15. The radio control unit 14 buffers the continuously inputted coded output voice signal, and outputs it as a coded output transmission signal to the radio unit 13 with timing according to a communication embodiment such as time division multiplex, and the radio unit 13 sends a radio wave from the antenna 2 based on the coded output transmission signal. And, the radio wave, after received at the base station, is transmitted to a phone terminal on the other end, where it is reproduced to a voice.

The receiving operation is now described. When the radio unit 13 generates a coded receive signal based on the radio wave received at the antenna 2, the radio control unit 14 buffers the coded receive signal, and continuously outputs the intermittently received coded receive signals. The coded receive signal is directly inputted to the voice CODEC 15 as a coded input voice signal, decoded and converted to a digital input voice signal in the voice CODEC 15, then converted to an analog input voice signal in the D/A converter 19, and amplified in the input amplifier 20 and outputted from the speaker 21 as a voice.

Further, the noise detector 22 detects the noise level contained in the digital output voice signal, the distance detector 23 outputs a distance signal corresponding to the distance measured based on the output signal of the distance sensor 4, and controller 24 calculates and outputs a control value corresponding to the noise level and the distance signal. Accordingly, the digital input voice signal is controlled as to its reproducing sound volume level by the receiving sound volume controller 25, and controlled as to its reproducing voice frequency characteristic by the receiving frequency characteristic controller 26. This adjustment may be done such that the reproducing sound volume level becomes higher as the noise level becomes higher, the reproducing sound volume level becomes higher as the distance becomes longer, the high-frequency noise is suppressed more as the noise level becomes higher, and the high-frequency, which easily attenuates, is enhanced more as the distance becomes longer.

Accordingly, if the distance between the speaker 21 and the user is short, as in the normal speech communication, the controller 24 determines, based on the distance to the user's head, that the distance is short, and thus while suppressing the reproducing sound volume level based on this, it adjusts the output level and/or the frequency characteristic based on the surrounding noise level, and conversely, if the user talks while taking picture of himself by the camera 3, since the user and the mobile phone terminal are apart from each other, the controller 24 can adjust the output level and/or the frequency characteristic based on distance change or surrounding noise level while increasing the basic output level, and thus, easy hearing can be provided in any speech condition.

As described above, in accordance with this first embodiment, in a mobile phone terminal having the voice CODEC 15 to which an input voice signal is inputted and the speaker 21 for reproducing a voice according to the output of the voice CODEC 15, there are provided the distance sensor 4 for measuring the distance therefrom to the user hearing the voice, the controller 24 for calculating control values based on the information on the distance to the user which was measured by the distance sensor 4, the receiving sound volume controller 25 disposed between the voice CODEC 15 and the D/A converter 19 for adjusting the digital input voice signal so as to change the sound volume level based on the control value, and the receiving frequency characteristic controller 26 disposed between the voice CODEC 15 and the D/A converter 19 for adjusting the digital input voice signal so as to change the frequency characteristic based on the control value, so that, even if the distance between the speaker 21 and the user greatly changes, the voice can be reproduced with an optimum sound volume/quality giving easy hearing according to the respective distances.

Accordingly, even if the distance between the speaker 21 and the user varies within a certain range, as in a mobile terminal such as mobile phone terminal, the sound volume of the speaker 21 is suppressed as low as possible if the distance is short, while the sound volume of the speaker 21 is increased as the distance becomes longer, by which reduction in the power consumption and easy hearing can be made compatible with each other, and hence there is an effect that a good sound field can be generated for the user.

In accordance with the first embodiment, there is provided the noise detector 22 for detecting the surrounding noise level based on a digital output voice signal, and the controller 24 calculates control values by using the noise level as well as the distance signal, so that the sound volume level and frequency characteristic of the speaker 21 can be controlled in accordance with the surrounding noise condition changes. Accordingly, the easy hearing of the voice in a wide variety of circumstances can be increased with a simple construction while controlling the sound volume level and frequency characteristic of the speaker 21 according to distance as well as reducing the basic power consumption of the device, so that there is an effect that a sound field giving easy hearing can be provided even if applied to a mobile phone terminal or the like, in particular, if applied to a mobile terminal having a TV telephone function.

### (Second Embodiment)

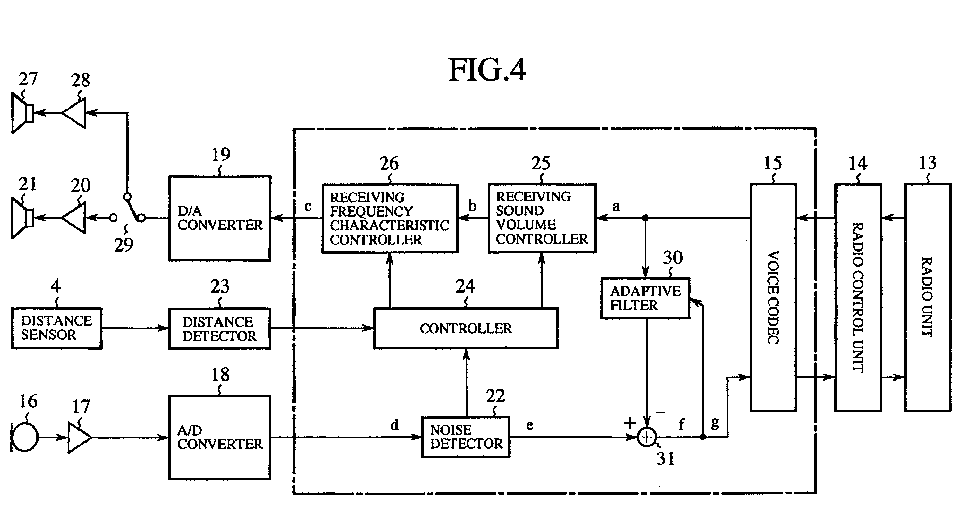

Fig. 4 is a block diagram showing the construction of the speech communication system according to a second embodiment for carrying out this invention. In the figure, 27 is a loudspeaker (voice reproducing means) for diffusing a voice, 28 is a second input amplifier for outputting a voice signal to the loudspeaker 27, 29 is a switch disposed in the analog input voice signal path between the D/A converter 19 and the input amplifier 20, for switching the destination of connection of the D/A converter 19 either to the input amplifier 20 or to the second input amplifier 28, 30 is an adaptive filter (filter) to which a digital input voice signal between the voice CODEC 15 and the receiving sound volume controller 25 and also a digital output voice signal between the noise detector 22 and the voice CODEC 15 are inputted, for adapting the filtering coefficient, for instance, so that the digital output voice signal at this position disappears when there is no sound and no noise, and for filtering and outputting the digital input voice signal by using the filtering coefficient, and 31 is an adder for subtracting the output signal of the adaptive filter 30 from the signal outputted from the noise detector 22. The construction except for this is similar to the first embodiment, and the description thereof is thus omitted.

The operation is now described.

If an analog input voice signal is outputted from the D/A converter 19 with the switch 29 being changed so that the destination of connection of the D/A converter 19 is the second input amplifier 28, the analog input voice signal is amplified in the second input amplifier 28, and based on this, the loudspeaker 27 expands and outputs the voice.

On the other hand, based on the digital input voice signal and the digital output voice signal, the adaptive filter 30 adapts the filtering coefficient so that the digital output voice signal at this location disappears when there is no sound and no noise, and uses this filtering coefficient to filter and output the digital input voice signal, and the adder 31 subtracts the output signal of the adaptive filter 30 from the output signal of the noise detector 22.

By adapting the filtering coefficient so that the digital output voice signal after the subtraction of the output signal of the adaptive filter 30 disappears when there is no sound and no noise, it is meant that the signal inputted to the adder 31 through the adaptive filter 30 based on the digital input voice signal and the signal inputted to the adder 31 from the microphone 16 are the same (phase is opposite), that is, this means that the filtering coefficient of the adaptive filter 30 is given a characteristic equivalent to the voice transmission characteristic from the loudspeaker 27 to the microphone 16. The operation except for this is similar to the first embodiment, and the description thereof is thus omitted.

As described above, in accordance with the second embodiment, there are provided the adaptive filter 30 to which a digital input voice signal is inputted and having a characteristic equivalent to the voice transmission characteristic from the loudspeaker 27 to the microphone 16, and the adder 31 for adding the output of the adaptive filter 30 to a digital output voice signal so as to remove the digital input voice signal component contained in the digital output voice signal, so that the runaround from the loudspeaker 27 to the microphone 16, or echo, caused by increasing the sound volume level or the sensitivity level, can effectively be suppressed, and there is an effect that a very excellent sound field giving easy hearing can be formed, even though it is applied to a mobile terminal having a TV telephone function using a low power consumption-oriented microphone or speaker.

### (Third Embodiment)

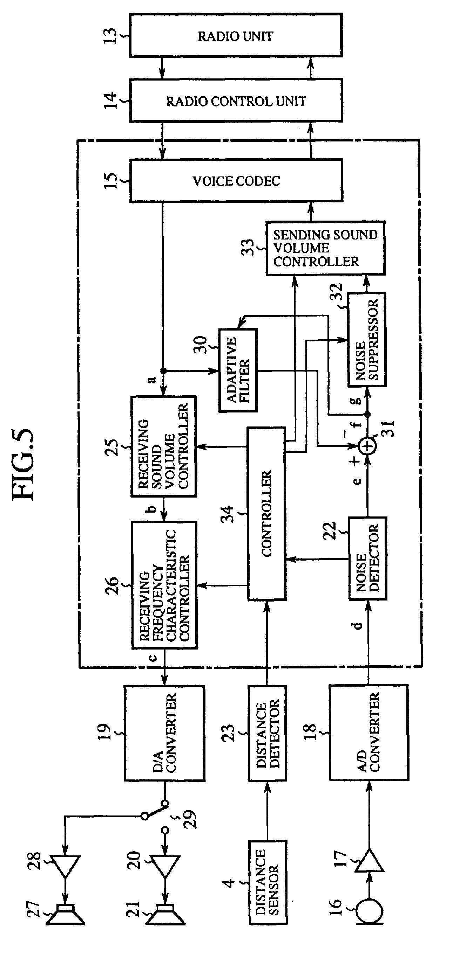

Fig. 5 is a block diagram showing the construction of the speech communication system according to a third embodiment for carrying out this invention. In the figure, 32 is a noise suppressor (output frequency characteristic control means) disposed in the digital output voice signal path between the adder 31 and the voice CODEC 15, for digitally changing the transmission frequency characteristic to remove a noise signal component contained in the digital output voice signal, 33 is a sending sound volume controller (output sound volume control means) disposed in the digital output voice signal path between the noise suppressor 32 and the voice CODEC 15, for adjusting the output level of the reproduced voice according to the digital output voice signal, and 34 is a controller (control means) for outputting control values to the noise suppressor 32 and the sending sound volume controller 33 as well as to the receiving sound volume controller 25 and the receiving frequency characteristic controller 26. The construction except for this is similar to the second embodiment, and the description thereof is thus omitted.

The operation is described below.

When the controller 34 outputs a control value of a predetermined value based on the distance signal and the noise level, the noise suppressor 32 digitally changes the transmission frequency characteristic to remove the noise signal component contained in the digital output voice signal. Further, the sending sound volume controller 33 also digitally performs a signal processing based on this control value to adjust the output level of the voice to be reproduced according to the digital output voice signal.

The adjustment may be conducted so that, for instance, the reproduced sound volume level becomes higher as the noise level becomes higher, the reproduced sound volume level becomes higher as the distance increases, the high-frequency noise is suppressed more as the noise level becomes higher, and the high-frequency, which easily attenuates, is enhanced as the distance increases.

Accordingly, if the distance between the speaker 21 and the user is short, as in the normal speech communication, the controller 34 determines, based on the distance to the user's head, that the distance is short, and while suppressing the reproducing sound volume level based on this, it adjusts the output level and/or the frequency characteristic based on the surrounding noise level, and conversely, if the user talks while imaging himself by the camera 3, the user and the mobile phone terminal are apart from each other, so the controller 34 can adjust the output level and/or the frequency characteristic based on the distance change or the surrounding noise level while increasing the basic output level, and thus, easy hearing can be provided in any speech condition.

As described above, in accordance with the third embodiment, in a mobile telephone terminal having the microphone 16 for generating an analog output voice signal according to a voice, and the voice CODEC 15 for outputting the analog output voice signal to the outside, there are provided the distance sensor 4 for measuring the distance to the user hearing the voice, the controller 34 for calculating a control value based on the information on the distance to the user which was measured by the distance sensor 4, the sending sound volume controller 33 disposed between the voice CODEC 15 and the adder 31, for adjusting the digital output voice signal so as to change the sound volume level based on the control value, and the noise suppressor 32 disposed between the voice CODEC 15 and the adder 31, for adjusting the digital output voice signal so as to change the frequency characteristic based on the control value, so that, if the distance between the microphone 16 and the user largely changes, control is exercised, for instance, to increase the sound volume level in reproduction as the distance increases, and thus, the voice signal can be generated at the time of reproduction with sound volume/quality giving easy hearing according to distance.

Accordingly, even if the distance between the microphone 16 and the user varies within a certain range, as in a mobile telephone terminal, reduction in the power consumption and ease of hearing in reproduction of the voice signal can be made compatible with each other by suppressing the sensitivity of the microphone 16 as low as possible if the distance is short, and increasing the sensitivity of the microphone 16 if the distance becomes longer, and hence there is an effect that a good sound field can be generated for the user at the time of reproduction even if applied to a mobile terminal having a TV telephone function.

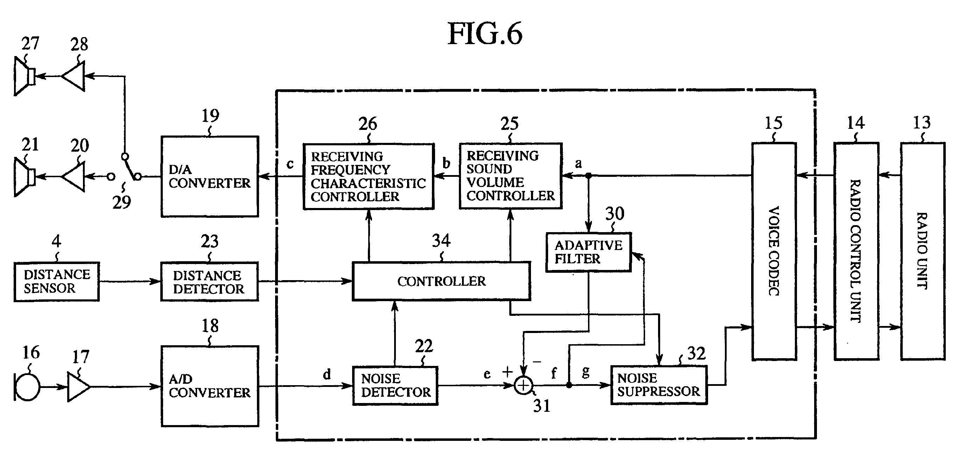

In addition, as illustrated in Fig. 6, noise can be suppressed to increase the ease of hearing by providing only either the sending sound volume controller 33 or the noise suppressor 32.

### (Fourth Embodiment)

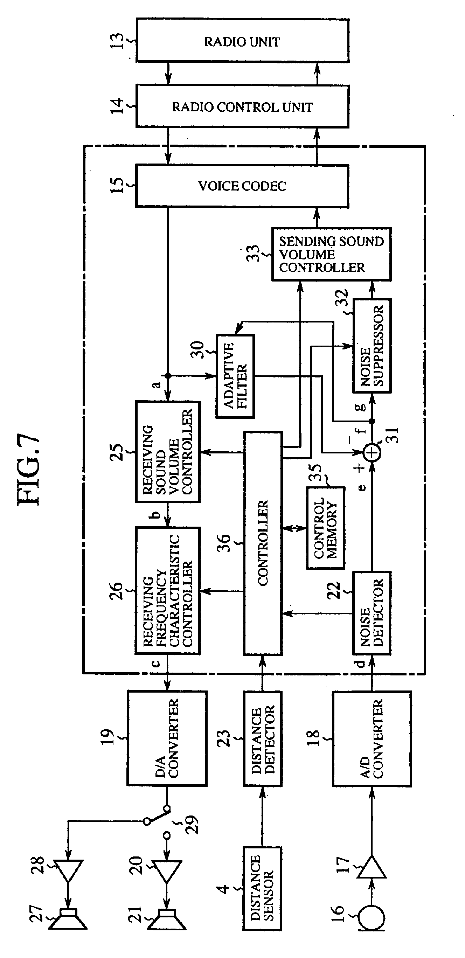

Fig. 7 is a block diagram showing the construction of the speech communication system according to a fourth embodiment for carrying out this invention. In the figure, 35 is a control memory 35 (memory means) for dividing the distance to the user and the noise level into a plurality of levels, and storing a preset value for each level, and 36 is a controller (control means) for using the distance signal and the noise level to search the control memory, thereby outputting the resultant value of the search as a control value. The construction except for this is similar to the third embodiment, and the description thereof is thus omitted.

The operation is described below.

When a distance signal is outputted from the distance detector 23 and a noise level is outputted from the noise detector 22, the controller 36 uses them to search the control memory 35, extracts a level containing the distance and noise level, and outputs the value of the level as a control value. The operation except for this is similar to third embodiment, and the description thereof is thus omitted.

As described above, in accordance with the fourth embodiment, the whole speech communication system from the speaker 21, loudspeaker 27 and microphone 16 to the radio unit 13 is accommodated in the portable housing 1, and the controller 36 searches the control memory 35 according to the distance signal and the noise level, and outputs the search result as a control value, so that, as compared with the case where the controller 36 calculates a control value each time based on the distance signal and the noise level, a value enabling the ease of hearing to be maintained can promptly be outputted while reducing the processing load of it to reduce the power consumption, so there is an effect that a mobile terminal fully capable of practical use is provided.

### (Fifth Embodiment)

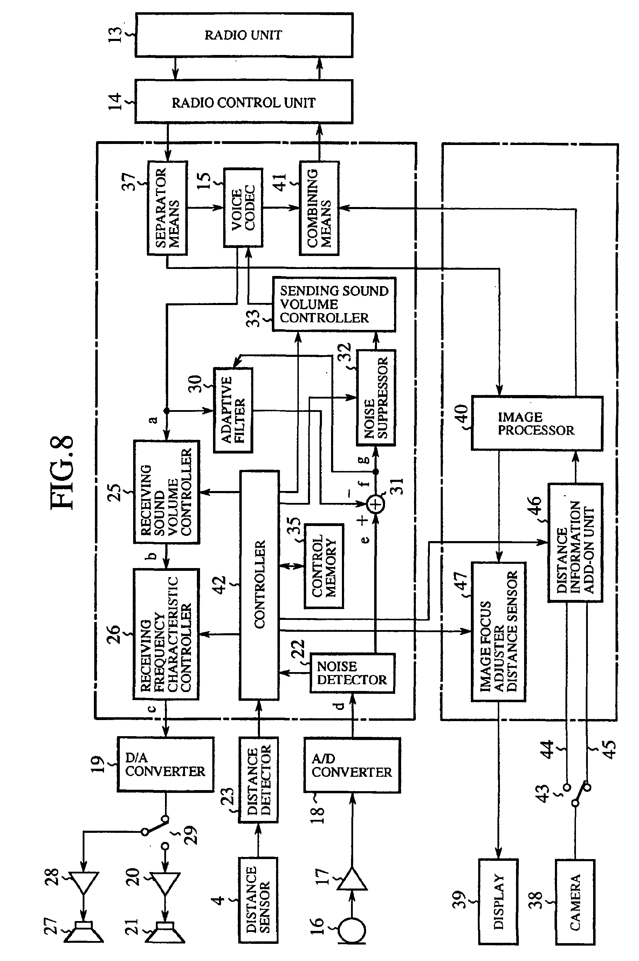

Fig. 8 is a block diagram showing the construction of the speech communication system according to a fifth embodiment for carrying out this invention. In the figure, 37 is a separator unit (separating means) for receiving a coded receive signal inputted from the radio control unit 14, buffering it, dividing it into a digital input voice signal and a digital input image signal, and outputting them, 38 is a camera (image signal generating means) mounted in the camera unit 3, 39 is a display (display means) for displaying an image by using the liquid crystal display device 6, 40 is an image processor (image signal output means, display image adjusting means) for outputting a picked-up image outputted from the camera 38 or a digital input image signal to the display 39, and processing the picked-up image to output a digital output image signal, and 41 is a combining means (synthesizing means) for buffering the digital output image signal and the digital output voice signal, and combining and outputting them to the radio control unit 14 as a coded transmission signal. The above digital input voice signal is inputted to the voice CODEC 15, and the above digital output voice signal is outputted from the voice CODEC 15.

Further, 42 is a controller (control means) for outputting a control value by searching the control memory 35, and outputting the distance information inputted from the distance detector 23, 43 is a second switch (use condition detecting means) changing its operation according to the position of the camera unit 3, for outputting the image signal to a first signal path when the camera unit 3 is facing forward, and outputting the image signal to a second signal path when the camera unit 3 is facing backward, 44 is the first signal path, 45 is the second signal path, 46 is a distance information add-on unit (information adding means) connected to the first signal path 44 and the second signal path 45, wherein when a picked-up image is inputted from the first signal path 44, it adds the distance information outputted from the controller 42 to it and outputs it to the image processor 40, whereas when a picked-up image is inputted from the second signal path 45, it directly outputs it to the image processor 40, and 47 is an image focus adjuster (display image adjusting means) which, upon inputting of an image signal based on the picked-up image from the image processor 40, cuts out an image according to the distance information outputted from the controller 42, enlarges it to the same size as the picked-up image, and outputs it to the display 39, otherwise directly outputs the image signal to the display 39. The construction except for this is similar to the fourth embodiment, and the description thereof is thus omitted.

The operation is described below.

When a coded receive signal combining a digital input voice signal and a digital input image signal is outputted from the radio control unit 14, the separator means 37 buffers it and separates them, and outputs the digital input voice signal to the voice CODEC 15, and outputs the digital input image signal to the image processor 40. The image processor 40 outputs the digital input image signal to the display 39, which displays it on the liquid crystal display device 6.

Further, if a picked-up image signal is outputted from the camera 38 with the camera unit 3 being facing forward, the second switch 43 outputs it to the first signal path 44, and the distance information add-on unit 46 adds to this picked-up image the distance information outputted from the controller 42 and outputs it to the image processor 40, and the combining means 41 buffers and combines the digital output image signal and the digital output voice signal from the voice CODEC 15, and outputs it to the radio control unit 14 as a coded transmission signal, which is transmitted as a radio wave from the radio unit 13 under the control of the radio control unit 14. And, it is decoded as a voice and an image at the telephone terminal on the other end, not shown.

Similarly, if a picked-up image signal is outputted from the camera 38 with the camera unit 3 being facing backward, the second switch 43 outputs it to the second signal path 45, the distance information add-on unit 46 directly outputs the picked-up image to the image processor 40, and it is similarly transmitted as a radio wave from the radio unit 13.

Further, the image processor 40 outputs the picked-up image inputted from the distance information add-on unit 46 to the image focus adjuster 47 according to its setting. If the picked-up image is inputted via the first signal path 44, the image focus adjuster 47 cuts out an image according to the distance information outputted from the controller 42, enlarges it to the same size as the picked-up image, and outputs it to the display 39, which displays the cut out and enlarged image on the liquid crystal display device 6. The operation except for this is similar to the fourth embodiment, and the description thereof is thus omitted.

As described above, in accordance with the fifth embodiment, there are provided the camera 38 for outputting a picked-up image, the image processor 40 for generating a digital output image signal according to the picked-up image, the radio unit 13 for transmitting the digital output image signal as a radio wave, distance information add-on unit 46 provided in the signal path for picked-up image from the camera 38 to the image processor 40, for adding the distance information for cutting out an image in a predetermined region of the picked-up image, and the combining means 41 for combining the digital output image signal and the digital output voice signal, and the controller 42 outputs distance information to the distance information add-on unit 46 according to the output of the distance sensor 4, so that the distance information can be used at the time of reproduction to cut out a required portion of the image, and enlarge and display it. Accordingly, even though it is applied to a mobile terminal having a TV telephone function, required one (user) can be displayed in a large size by efficiently using the screen of the liquid crystal display device 6, and desired one (user) can be displayed in a stable size by controlling the cutout size according to distance, so the visibility of the image can be remarkably increased.

In accordance with the fifth embodiment, the second switch 43 operating according to the position of the camera unit 3 is provided, and the distance information add-on unit 46 switches addition/no addition of distance information according to the status of the second switch 43, so that, if the camera unit 3 faces forward to image the user, part of the image can be cut out to enlarge and stably display a image desired to be displayed, while, if the camera unit 3 faces backward, for instance, to image the surrounding scene, it can be displayed at a wide angle without cutout, so that there is an effect that optimum imaging is automatically allowed according to the use condition without changing the setting each time, thereby increasing the usefulness.

In accordance with the fifth embodiment, since the image focus adjuster 47 cuts out an image from the picked-up image outputted from the image processor 40 according to distance information, and enlarges and outputs it to the display 39, the cutout image similar to that being displayed on the telephone terminal on the other end can be displayed and confirmed on the liquid crystal display device 6 on this end, and the imaging conditions can easily be adjusted accordingly, so there is an effect that necessary matters can be efficiently conveyed to the other party.

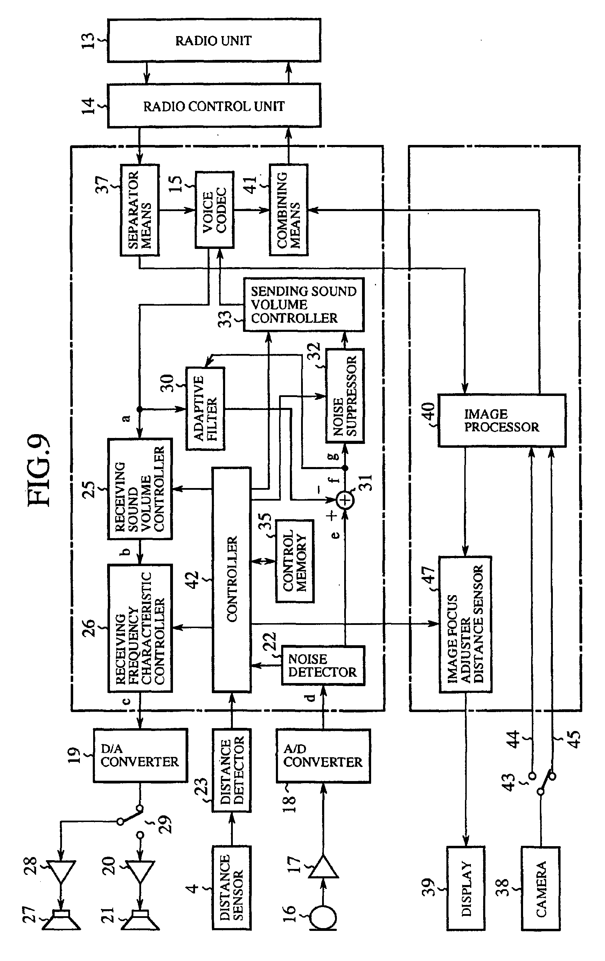

In addition, even in the speech communication system as shown in Fig. 9, the image focus adjuster 47 cuts out an image from the picked-up image outputted from the image processor 40 according to distance information, and enlarges and outputs it to the display 39, so that the cutout image can be displayed and confirmed on the liquid crystal display device 6 on this end, and the imaging conditions can be adjusted accordingly, so there is an effect that necessary matters can be efficiently conveyed to the other party.

### (Sixth embodiment)

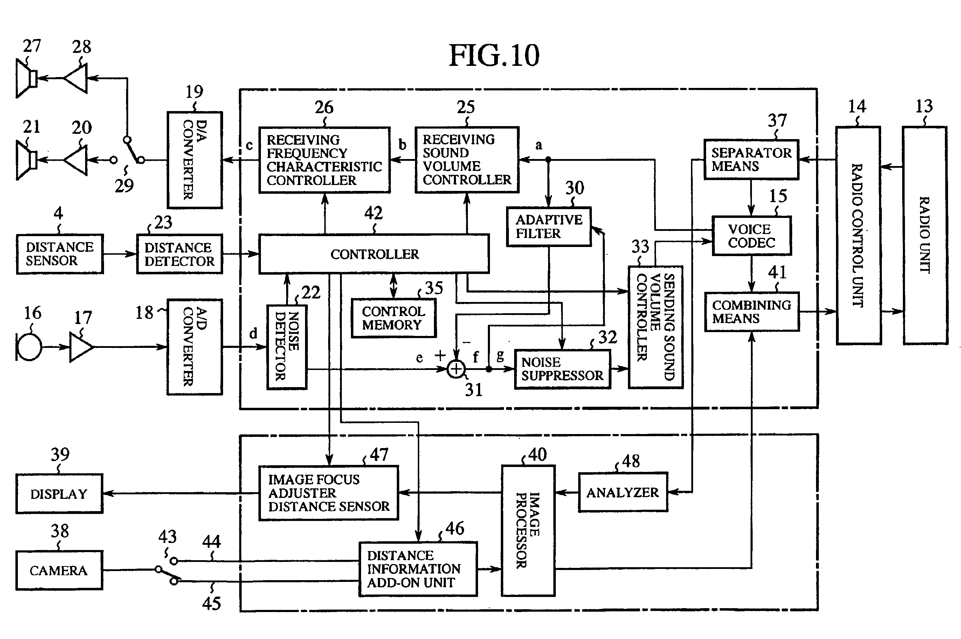

Fig. 10 is a block diagram showing the construction of the speech communication system according to a sixth embodiment for carrying out this invention. In the figure, 48 is a analyzer (display image adjusting means) disposed in the digital input image signal path between the separator means 37 and the image processor 40, and if it has inputted thereto a digital input image signal with added distance information, it cuts out an image according to distance, and enlarges it to the same size as the picked-up image and outputs it to the image processor 40, otherwise, it directly outputs the image signal to the image processor 40. The construction except for this is similar to the fifth embodiment, and the description thereof is thus omitted.

The operation is described below.

When the digital input image signal is inputted from the separator means 37, the analyzer 48 checks this signal, and if there is distance information added, the analyzer 48 cuts out an image according to the distance, and enlarges it to the same size as the picked-up image and outputs it to the image processor 40, and if there is no distance information added, it directly outputs the digital input image signal to the image processor 40. The operation except for this is similar to the fifth embodiment, and the description thereof is thus omitted.

As described above, in accordance with the sixth embodiment, if a digital input image signal with distance information added thereto is inputted, the analyzer 48 cuts out an image, and enlarges and outputs it to the image processor 40, so that, even though applied to a mobile terminal having a TV telephone function, required one (user) can be displayed in a large size by efficiently utilizing the screen of the liquid crystal display device 6, and desired one (user) can be displayed in a stable size by controlling the cutout size according to distance, so the visibility of the image sent from the party on the other end can be remarkably increased.

In the above embodiments, the description has been made to examples in which the distance sensor 4 is disposed in the vicinity of the camera unit 3, but, in the mobile phone terminal related to these embodiments, it is only needed at least to distinguish the normal speech condition only through voice and the speech condition using the camera 38, and in addition, if it is disposed near the opening 7 for microphone or the opening 5 for speaker, or between the openings 5 and 7, a similar effect can be obtained. In particular, since the image cutout process is carried out based on the distance detected by the distance sensor 4, the distance sensor 4 is disposed near the camera unit 3 so that the distance between the camera 38 and the user can be measured as accurately as possible.

Furthermore, in the above embodiments, the description has been made to examples in which the invention is applied to a mobile telephone terminal, but, it can also advantageously be applied for instance, in a TV conference system, a monitoring system, or the like. In this case, the distance sensor 4 may be provided integrally with the camera 38, the microphone 16, or the liquid crystal display device 6, or may be provided separately.

### Industrial Applicability

As described above, in the voice reproducing system, voice signal generating system, and speech communication system which are related to this invention, control is exercised on the output level and/or frequency characteristic of a voice according to the distance between the microphone and/or speaker and the user, and thus, there is an effect that an optimum sound field can be produced when they are applied to a mobile phone terminal, TV conference system, a monitoring system, or the like.

## Claims

1. A voice reproducing system having a voice input means to which an input voice signal is inputted, and a voice reproducing means for reproducing a voice according to the output of the voice input means,
said voice reproducing system comprising:
an input sound volume level control means disposed in the transmission path for input voice signal from said voice input means to the voice reproducing means, for controlling such that the sound volume level of the voice outputted from the voice reproducing means changes; and/or
an input frequency characteristic control means disposed in the transmission path for input voice signal from said voice input means to the voice reproducing means, for controlling such that the frequency characteristic of the voice outputted from the voice reproducing means changes; and further comprising:
a distance detecting means for measuring the distance to the user hearing said voice; and
a control means for outputting a control signal to said input sound volume control means and/or input frequency characteristic control means according to information on the distance to the user which has been measured by said distance detecting means.

2. The voice reproducing system according to claim 1, further comprising a noise detecting means for measuring noise,
wherein the control means outputs a control signal to said input sound volume level control means and/or input frequency characteristic control means according to the information on the distance to the user along with the information on the noise measured by the noise detecting means.

3. A voice signal generating system having a voice signal generating means for generating an output voice signal according to a voice, and a voice signal output means for outputting the output voice signal to the outside,
said voice signal generating system comprising:
an output sound volume level control means disposed in the transmission path for output voice signal from said voice signal generating means to the voice signal output means, for controlling such that the sound volume level of the voice reproduced according to said output voice signal changes; and/or
an output frequency characteristic control means disposed in the transmission path for output voice signal from said voice signal generating means to the voice signal output means, for controlling such that the frequency characteristic of the voice reproduced according to said output voice signal changes; and further comprising:
a distance detecting means for measuring the distance to the user having given said voice; and
a control means for outputting a control signal to said output sound volume level control means and/or output frequency characteristic control means according to information on the distance to the user which has been measured by said distance detecting means.

4. The voice signal generating system according to claim 3, further comprising a noise detecting means for measuring noise,
wherein the control means outputs a control signal to said output sound volume level control means and/or output frequency characteristic control means according to the information on the distance to the user along with the information on the noise measured by the noise detecting means.

5. A speech communication system having a voice input means to which an input voice signal is inputted, a voice reproducing means for reproducing a voice according to the output of the voice input means, a voice signal generating means for generating an output voice signal according to a voice, and a voice signal output means for outputting the output voice signal to the outside,
said speech communication system comprising at least one means selected from:
an input sound volume level control means disposed in the transmission path for input voice signal from said voice input means to the voice reproducing means, for controlling such that the sound volume level of the voice outputted from the voice reproducing means changes;
an input frequency characteristic control means disposed in the transmission path for input voice signal from said voice input means to the voice reproducing means, for controlling such that the frequency characteristic of the voice outputted from the voice reproducing means changes;
an output sound volume level control means disposed in the transmission path for output voice signal from said voice signal generating means to the voice signal output means, for controlling such that the sound volume level of the voice reproduced according to said output voice signal changes; and
an output frequency characteristic control means disposed in the transmission path for output voice signal from said voice signal generating means to the voice signal output means, for controlling such that the frequency characteristic of the voice reproduced according to said output voice signal changes; and further comprising:
a distance detecting means for measuring the distance to the user; and
a control means for outputting a control signal to said selected means according to the information on the distance to the user which has been measured by said distance detecting means.

6. The speech communication system according to claim 5, further comprising a noise detecting means for measuring noise according to the output voice signal,
wherein the control means outputs a control signal to said selected means according to the information on the distance to the user along with the information on the noise measured by the noise detecting means.

7. The speech communication system according to claim 5, further comprising:
a filter to which an input voice signal is inputted from the signal path from the voice input means to the voice reproducing means, and which has a characteristic equivalent to the voice transmission characteristic from the voice reproducing means to the voice signal generating means; and
an adder for adding the output of said filter to the output voice signal so as to remove said input voice signal component contained in the output voice signal.

8. The speech communication system according to claim 5,
wherein the voice input means, voice reproducing means, voice signal generating means, input sound volume level control means, input frequency characteristic control means, output sound volume level control means, output frequency characteristic control means, distance detecting means, and control means are accommodated in one portable housing; and
said control means has a memory means in which the distance to the user and the noise level are divided into a plurality of levels, and in which control values for the input sound volume level control means, input frequency characteristic control means, output sound volume level control means, and output frequency characteristic control means are stored for each level, and the control means searches the memory means according to the inputted information on the distance to the user, and outputs the values resulted from the search to the input sound volume level control means, input frequency characteristic control means, output sound volume level control means, and output frequency characteristic control means.

9. The speech communication system according to claim 5, further comprising:
an image signal generating means for generating an output image signal according to a picked-up image;
an image signal output means for outputting the output image signal to the outside;
an information add-on means disposed in the transmission path for output image signal from said image signal generating means to the image signal output means, for adding information for varying the image to be reproduced according to said output image signal; and
a combining means for combining the output image signal and the output voice signal;
wherein the control means outputs additional information for image cutout to said information add-on means according to the information on the distance to the user.

10. The speech communication system according to claim 9, further comprising:
a use condition detecting means for detecting whether or not the image signal generating means is imaging the user,
wherein the information add-on means changes the additional information to be added to the output image signal according to the contents detected by the use condition detecting means.

11. The speech communication system according to claim 5, further comprising:
a separating means for separating an input signal into an input voice signal and an input image signal;
a display means for displaying an image according to said input image signal; and
a display image control means which is disposed in the transmission path for input image signal from said separating means to the display means, and, if the input image signal has added thereto additional information based on the information on the distance to the user, cuts out according to that a partial image from the image to be generated from the input image signal itself to display it on the display means.

12. The speech communication system according to claim 11, further comprising:
an image signal generating means for generating an output image signal according to a picked-up image;
an image signal output means for outputting the output image signal to the outside;
an information add-on means disposed in the transmission path for output image signal from said image signal generating means to the image signal output means, for adding information for changing the image to be generated according to said output image signal; and
a combining means for combining the output image signal and the output voice signal;
wherein the display means displays said output image signal and/or input image signal; and
if the display means displays an image based on the output image signal, the display image control means cuts out a partial image from said image to display it on the display means according to the information on the distance to the user which has been measured by the distance detecting means.
